# EUROPEAN PATENT APPLICATION

(11) **EP 0 949 857 A2**
(43) Date of publication of application: **13.10.1999**
(21) Application number: 99302412.4
(22) Date of filing: 29.03.1999
(51) Int. Cl.: H05K 7/20, H05B 3/14

(54) **Device for housing communications and electronics equipment using positive temperature coefficient material**

(30) Priority: 09.04.1998 US 57806
(71) Applicant: LUCENT TECHNOLOGIES INC., Murray Hill, New Jersey 07974-0636 (US)
(72) Inventor: Aakula, Nandakumar G., Suffern, New York 10901 (US); Plaza, Daniel, Mendham, New Jersey 07945 (US); Truong, Han Q., Iselin, New Jersey 08830 (US)
(74) Representative: Johnston, Kenneth Graham

(57) **Abstract**

An improved enclosure for housing communications and electronics equipment comprises a heating element fabricated with a positive temperature coefficient material. The enclosure is particularly useful for housing communications equipment and cell site base stations for cellular telephone systems in the outdoors; it has self-regulating heating capabilities that are not dependent upon voltage parameters, thereby enabling its use in diverse geographic locations. In a preferred embodiment, a plurality of PTC heating elements are used and selectively located adjacent a plurality of circuitry regions. DC power may be used to energize the PTC heaters, and the enclosure may be used for telephone equipment operating with AC or DC power.

## Description

### Field Of The Invention

The invention relates to an enclosure for housing communications and electronics equipment using a heating element comprising a positive temperature coefficient material. The enclosure is particularly useful for the outdoor mounting of communications equipment and especially cell site base stations of cellular telephone systems.

### Background Of The Invention

It is important that a proper operating temperature be maintained within an enclosure that houses an electrical assembly or communications equipment. The equipment often needs to be maintained at or above a minimum operating temperature. For example, certain electronic devices will not operate below 0° C. Yet due to the intended use for the equipment (e.g., a cell site base station for a cellular telephone system), the equipment may have to be mounted outdoors where the ambient temperature may at times drop to below 0° C or other minimum operating temperature for the equipment.

Traditionally, for equipment mounted outdoors, heaters have been placed in the housings for keeping the equipment sufficiently warm. However, traditional heaters have presented considerable difficulties. One difficulty relates to disabling of the equipment in a cold environment which may be necessitated, for example, when the equipment is inspected for maintenance, repaired, or when there is a power outage. In these cases, it may be necessary to heat the equipment to the minimum operating temperature before reactivation, but to do so, the heater may have to be manually operated. Another difficulty arises because the equipment itself may have heat generating components, or it may be heated from sun rays hitting the assemblies in the outdoors. Traditional heaters are known to create fire hazards. Solar shields have been placed over the devices to prevent an increase in temperature from the sun, but these shields may adversely inhibit the dissipation of heat from the system. Thermostat controls have been placed on the enclosures and regulated externally, that is, in an effort to control the temperature within the enclosure, but regulating the temperature in this fashion produces unstable performance, is not reliable, and generates a relatively high failure rate. Another difficulty with traditional heaters is that presently available heater pads are comprised of materials that will not operate at narrow voltage ranges, placing limits on use of the devices. For example, these systems are not operable for cell site base stations located in Europe or other parts of the world where a high operating voltage (e.g., >110V), is required.

The challenges presented by the outdoor environment coupled with the increased use of outdoor-mounted communications equipment has led to innovative designs for the electrical housing units themselves. For example, a new housing design having heat dissipation fins is described in U.S. Pat. application serial no. 09/008,726, "*Heat Dissipation Structure for an Electrical Assembly,*" filed Jan. 1, 1998 by Aakalu *et al.,* and assigned to the present assignee, which is hereby incorporated by reference. *See also* U.S. Pat. application serial no. 08/976,708, *"Multi-Layered Polymer Structure For Fabricating Housings For Communications And Electrical Products,"* by Zimmerman *et al.,* and U.S. Pat. application serial no. 08/976,713, *"Dual Network Housing Device And Improved Method For Enclosing Networks*" both filed Nov. 24, 1997, and assigned to Lucent Technologies, and U.S. Pat. 3,900,700 to Gaudet, *"Protective Enclosure."* All three of the patents cited immediately above are incorporated herein by reference. These devices provide improved heat dissipation features and flame retardant materials. However, it would be advantageous to provide an improved housing that avoids use of traditional heater elements and their associated drawbacks.

### Summary Of The Invention

Applicants have discovered an improved enclosure for housing electronics and communications devices in the outdoors comprises an enclosure having a heating element disposed therein, wherein the heating element is comprised of a material having a positive temperature coefficient (PTC) for generating heat by virture of the internal resistance of the material when a current is passed through it, and wherein the PTC material is coupled to a power source for generating current. Preferably, the housing is configured for enclosing the circuitry of a cellular telephone cell site base station, and a plurality of heating elements comprising one or more plates of PTC material are selectively located adjacent regions of the circuitry. With the use of PTC material, an enclosure having self-regulating heating capabilities is provided that is not dependent upon voltage parameters, thereby enabling its use in diverse geographic locations.

### Brief Description Of The Drawings

For a better understanding of the invention, an exemplary embodiment is described below, considered together with the accompanying drawings, in which:
FIG. 1 is a schematic representation of one embodiment of the inventive enclosure having two positive temperature coefficient heaters disposed therein;
FIG. 2 is a cross-sectional side view of one embodiment of a PTC heating element for use in the inventive enclosure; and
FIG. 3 is a perspective plan view of a circuit board of a cell site base station housed within an inventive enclosure having a plurality of positive temperature coefficient heating elements selectively disposed therein, the enclosure being shown in the open position.

It is to be understood that these drawings are for the purposes of illustrating the concepts of the invention and are not to scale.

### Detailed Description Of The Invention

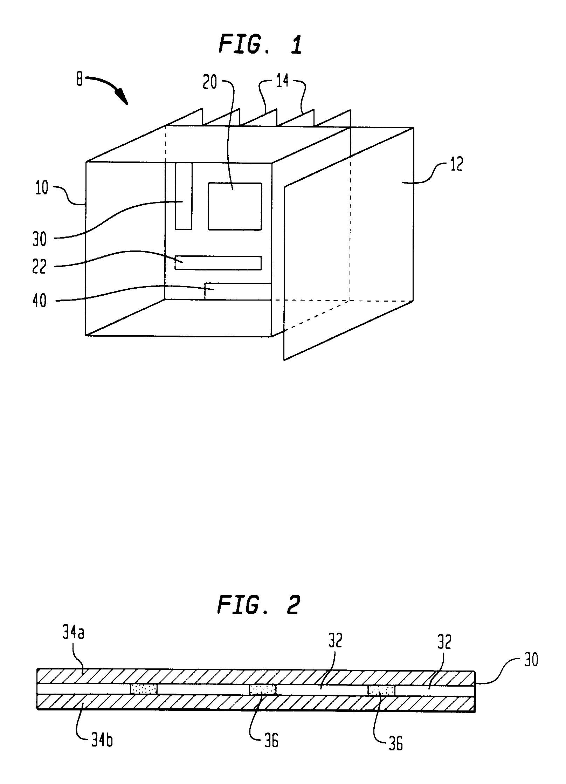

Applicants have discovered that an improved enclosure for housing electronics and communications equipment may be configured using a positive temperature coefficient material. A schematic representation of the inventive enclosure is illustrated in FIG. 1. The enclosure unit 8 has an outer structure or exterior wall 10 for encasing the equipment. An access door 12 is provided to gain entry to the interior of the unit, and a plurality of heat dissipation fins 14 are secured to an exterior wall of the unit. Electronic sub-units 20, 22, having circuitry disposed thereon are housed within the enclosure. Heating elements 30, 40, comprised of positive temperature coefficient (PTC) thermistor or resistor material are strategically located within the enclosure adjacent the circuitry.

The PTC heating elements may each comprise one or more plates of PTC thermistor or resistor material disposed between a pair of electrodes. Positive temperature coefficient (PTC) heaters comprise solid state semiconductors and generally have been used in consumer products such as hair dryers, clothes dryers, space heaters, automobile mirrors, and the like. A PTC heater comprises a ceramic or polymeric PTC resistor or thermistor material placed in contact with a current generating source, e.g., electrodes. The PTC material produces heat by virtue of the internal resistance generated by the material when a current is passed through it. Some positive temperature coefficient heaters are described, for example, in U.S. Pat. No. 5,658,479 to Tadokoro, *"Positive Temperature Coefficient Thermistor Heater and Positive Temperature Coefficient Thermistor Heater Device Using the Same,"* issued Aug. 19, 1997, and U.S. Pat. No. 4,972,067 to Lokar *et al., PTC Heater Assembly and A Method of Manufacturing the Heater Assembly,"* issued Jun. 21, 1989, both of which are hereby incorporated by reference.

FIG. 2 shows the basic configuration of one heating element 30 with more detail than in FIG 1. The heating element may comprise plates of PTC material 32 separated by insulating material 36, although a single plate of PTC material also may be used. The PTC material is disposed between a pair of electrodes 34a, 34b, for generating current. The electrodes are connected to a power source (not shown). DC power may be used to energize the PTC heaters, and the enclosure may be used for telephone equipment operating with AC or DC power.

In operation, when a current is passed through the PTC plates 32 by activating the electrodes 34a, 34b, heat is generated due to the internal resistance of the PTC material. The rate at which the temperature increases or the heat dissipation constant (* ) (i.e., the heat dissipated in a specified period of time by a 1°C change with ambient temperature), will depend upon the type of PTC material selected, its electrical characteristics, the current generated, and the ambient temperature. The resistance of the PTC material may increase at an exponential or close to exponential rate until a predetermined temperature is reached, at which point the material conducts negligible current, such that heat is no longer generated. In this way, the PTC device is autostabilizing and self-regulating, that is, it autostabilizes at a predetermined temperature. Advantageously, a pair of PTC units may be connected in parallel to each other, sharing a conductive terminal connected to the power source for optimizing heat generation properties relative to the applied power.

Various compositions of materials may be selected for the PTC material, electrodes, or insulating materials, as is known in the field. For example, the PTC material may comprise barium titanate or a carbon paste screen-printed on a polyester firm. The electrodes may comprise aluminum, and the insulating material may comprise polyimide or silicon dioxide. Different dopants or concentrations of dopants may be diffused or implanted into the PTC plates depending upon the predetermined operating temperature desired to be maintained, and the selection of dopants may be determined by those skilled in the field of making PTC materials and heating elements. The heat generating properties of the PTC heating elements may be adjusted depending on the anticipated local temperatures of the ambient in which the enclosure will be placed. Upon specifying the desired operating temperatures and conditions, PTC heating elements may be obtained from Texas Instruments, Inc., Panasonic Corp., Hartford Eichenauer, E.I. duPont de Nemours and Co., or DBK Techniterm of Germany. For a cellular telephone base station, PTC heating elements may be used having a length of about eight inches and a width of about one inch.

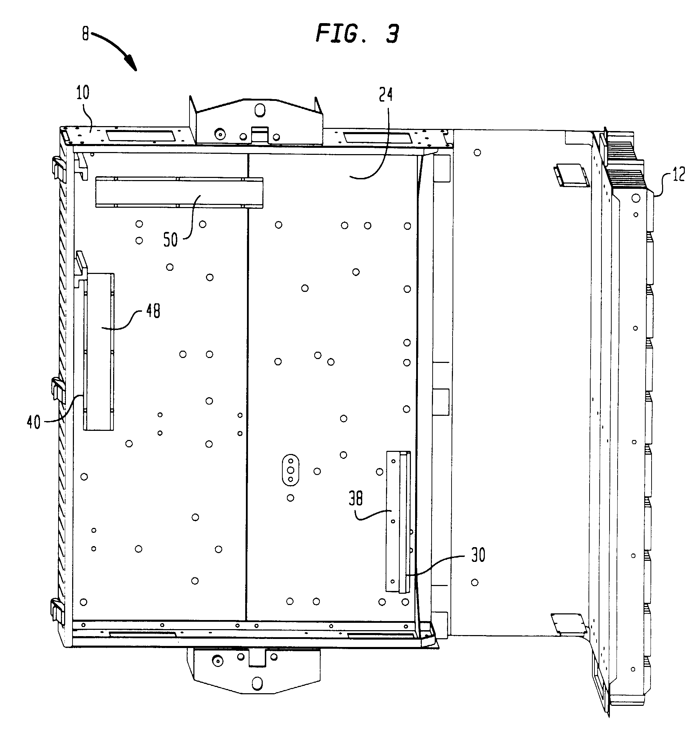

As illustrated in FIG. 3, one or more PTC heating elements 30, 40, 50 may be mounted on brackets 38, 48 and secured to the printed circuit board 24 of an electronics or communications system. Also, the PTC heating elements may be secured to the wall of the enclosure unit 10, or inside the door 12, instead of, or in addition to, being installed on the printed circuit board 24. As shown, advantageously one or more heating elements comprised of materials having different temperature coefficients are selected and strategically placed within the enclosure to provide for distributed and controlled heating. For example, in the case of a cell telephone base station, the heating element placed near the high power RF amplifier may be selected as comprising a material that will not dissipate heat during normal operating conditions, whereas the heating element or elements placed near the circuit packs should dissipate heat when the ambient temperatures are at about 0°C or lower. The heating elements may be fabricated to be flexible, increasing the mounting capabilities within the enclosure.

All heating elements preferably should dissipate heat when the unit is activated for the warm-up stage, i.e., when the unit is heated to initiate its operation. The PTC heating elements may be configured to automatically activate upon reaching a threshold minimum temperature, such that external activation is not required. For the cell telephone base station, the heater output should be insensitive to the input voltages. In this way, the same heater assembly may be used regardless of the AC voltage at which each particular cell base station operates, and thus, the same type of enclosure unit may be used at various geographic locations. The elements of the circuitry and their heat generating properties are well known such that the selective placement of the PTC elements may be performed by one skilled in the field. Cell base station circuitry also is described in U.S. Pat. No. 5, 613,234, issued Mar. 18, 1997 to Vella-Coleiro, *"Receive Filter Using Frequency Translation for or in Cellular Telephony Base Station,"* assigned to Lucent Technologies, Inc., the present assignee, which is incorporated herein by reference.

The PTC elements may be selectively located based not only on the circuitry of the device but also the configuration of the housing. For example, a housing may be used as described in U.S. patent application serial no. 09/008,726, incorporated herein above; that is, the housing may have an array of heat conducting fins secured to an exterior wall of the enclosure and a perforated cover over the fins. The PTC elements may be selectively placed on the enclosure wall, such as a wall distal the heating conducting fins.

Use of the PTC heating elements provides advantages as external thermostat controls are no longer needed. The heaters may be left on at all times, and it is not necessary that they be activated or deactivated externally to avoid cooling problems. The inventive enclosure having the PTC heating element has enhanced reliability as compared with traditional devices with thermostat controls, and passive control over temperature is achieved. Safety is enhanced; due to the self-regulating nature of the heaters, the possible risk of fire hazards is reduced. Heater output may be insensitive to the input voltage to provide a more versatile device usable in more diverse geographic locations.

It is understood that the embodiments described herein are merely exemplary and that a person skilled in the art may make variations and modifications without departing from the spirit and scope of the invention. All such variations and modifications are intended to be included within the scope of the appended claims.

## Claims

1. An improved enclosure for housing electronics or communications equipment having a minimum operating temperature, wherein the improvement comprises at least one heater disposed within the enclosure comprising at least one plate of positive temperature coefficient (PTC) material connected to a source of power for generating current through the PTC material.

2. The device of claim 1 in which the PTC material comprises a thermistor or resistor material.

3. The device of claim 1, in which the at least one heater comprises one or more plates of PTC material disposed between a pair of electrodes.

4. The device of claim 3, further comprising a plurality of PTC heaters selectively disposed in the device adjacent the equipment.

5. The device of claim 4, in which the equipment comprises at least one printed circuit board, and the plurality of PTC heaters are selectively mounted on the printed circuit board.

6. The device of claim 4 in which a plurality of PTC heaters are selectively mounted to one or more of the interior walls of the enclosure.

7. An improved structure for enclosing an electrical assembly and warming the assembly to at or above a minimum operating temperature, the assembly being contained within an enclosure of the type comprising an array of heat conducting parallel planar fins secured to an exterior wall of the enclosure, the fins being aligned parallel to a vertical axis when the enclosure is mounted to define a plurality of vertical channels between adjacent pairs of fins, the fins being formed with a plurality of aligned notches to define a plurality of horizontal channels, and a perforated cover over and spaced from the fins, wherein the improvement comprises:
a heater disposed within the enclosure comprising at least one plate of PTC thermistor or resistor material connected to a power source, wherein upon activation of the power source, a current generated through the PTC material increases the temperature of the material and of the ambient surrounding the equipment to at or above the minimum operating temperature.

8. The improved device of claim 7, further comprising a plurality of PTC heaters selectively disposed within the enclosure, wherein each heater comprises one or more plates of PTC material disposed between a pair of electrodes.

9. A cellular telephone base station comprising the improved device of claim 1,6 or 8.

10. An improved method for maintaining the temperature of an outdoor-mounted electronic or communications assembly to at or above a minimum operating temperature, the method comprising the step of securing a plurality of PTC heaters within an enclosure for the assembly.
